Europäisches Patentamt

European Patent Office

Office européen des brevets

(11) Publication number: **0 400 241**
**A1**

## EUROPEAN PATENT APPLICATION

(21) Application number: 89308796.5

(22) Date of filing: 30.08.89

(51) Int. Cl.⁵: **G01P 3/44**

(30) Priority: 30.05.89 JP 61949/89

(43) Date of publication of application:
**05.12.90 Bulletin 90/49**

(84) Designated Contracting States:
**BE CH DE FR GB LI NL**

(71) Applicant: **TAMAGAWA SEIKI KABUSHIKI KAISHA**
**19-9 Shin Kamata 3-Chome**
**Ota-ku Tokyo(JP)**

(72) Inventor: **Fukuzawa, Yoshinao c/o Iida Kojyo Tamagawa Seiki Kabushiki Kaisha 1879 Ooyasumi**
**Iida City Nagano Prefecture(JP)**

(74) Representative: **Lawson, David Glynne et al**
**MARKS & CLERK 57-60 Lincoln's Inn Fields**
**London WC2A 3LS(GB)**

(54) **Hollow shaft type resolver.**

(57) A hollow shaft type resolver includes a rotation-sensing stator provided at a housing, a hollow rotor shaft mounted for rotation within the housing and a rotary transformer for taking out rotation-sensing signals from the rotation-sensing rotor or for supplying electrical power to the rotation-sensing rotor. The housing is connected to a device whose rotation is to be sensed, and a rotor shaft of the device, whose rotation is to be sensed, is inserted into a central bore of the hollow rotor shaft. A pair of bearings are provided at both ends of the housing while both ends of the hollow rotor shaft are rotatably carried by these bearings, so that high precision rotation sensing signals are produced that are not offset by offset or deviation in the mounting position of the hollow rotor shaft.

# FIG. 2

# HOLLOW SHAFT TYPE RESOLVER

## BACKGROUND OF THE INVENTION

### Field of the Invention

This invention relates to a hollow shaft type resolver. More particularly, it relates to a hollow shaft type resolver in which both ends of a hollow rotor shaft are carried by a pair of bearings to assure high precision rotation sensing or detection despite incidental offset or deviation in the shaft mounting of the device whose rotation is to be sensed.

### Prior Art

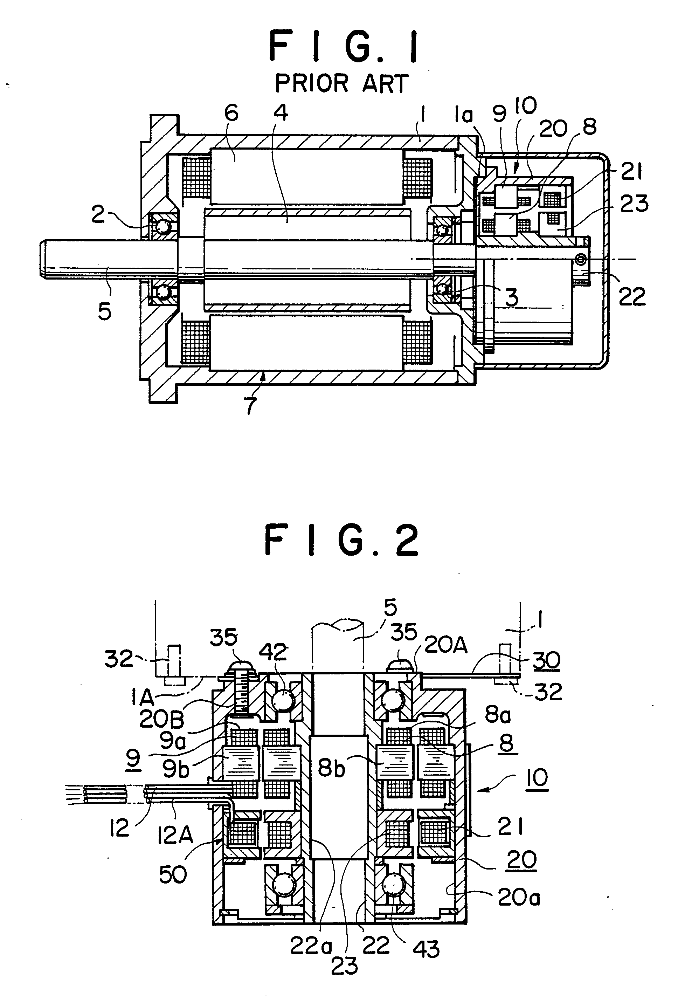

Heretofore, a variety of hollow shaft type resolvers have been used in the art. As an illustrative example, a construction produced in the company of the present Assignee is shown in Fig. 1.

Referring to this figure, the numeral 1 denotes a generally cylindrical rotatory device, the rotation of which is to be sensed, such as an electric motor. The device 1 has bearings 2, 3, at its both ends, whereby a rotor shaft 5, the rotation of which is to be sensed, and which carries integrally a rotor 4, is mounted for rotation about its own axis.

Within the interior of the device 1, a stator 6 is provided in register with the rotor 4, with the stator 4 and the rotor 6 constituting an electrical motor 7.

A rotation sensor 10 is comprised of a housing 20 which is separate from the device 1, and within which there are provided a rotation-sensing stator 9 and a rotary transformer stator 21.

A rotation-sensing rotor 8 is fitted on the outer periphery of a hollow rotor shaft 22 inserted and fitted into the rotor shaft 5, the rotation of which is to be sensed. A rotary transformer rotor 23 is provided on the hollow rotor shaft 22 and in register with the rotary transformer stator 21.

Hence, the housing 20 is fitted at its one end in a mounting recess 1a formed in the device 1.

The above described conventional rotation sensor has however the following disadvantages.

In the construction shown in Fig. 1, the housing 20 is fitted in the mounting recess 1a with the hollow rotor shaft 22 fitting to the rotor shaft 5 the rotation of which is to be sensed. Thus the hollow rotor shaft 22 is not supported by the bearings. Therefore, in the event of an offset between the mounting recess 1a and the shaft 5 or a deviation in the mounting position of the shaft 5, the rotation may not be sensed with a high degree of precision.

## OBJECT AND SUMMARY OF THE INVENTION

It is therefore a primary object of the present invention to provide a hollow shaft type resolver wherein both ends of the hollow rotor shaft are supported by a pair of bearings in such a manner that high precision rotation sensing may be attained despite incidental offset or deviation in the shaft position of the device whose rotation is to be sensed.

According to the present invention, there is provided a hollow shaft type resolver comprising a rotation-sensing stator provided at a housing, a hollow rotor shaft mounted for rotation in said housing, a rotation-sensing rotor provided on said hollow rotor haft, and a signal transmitting device for taking out rotation-sensing signals from said rotation-sensing rotor or for supplying electrical power to said rotation-sensing rotor, wherein said housing is connected to a device whose rotation is to be sensed, and wherein a rotor shaft, whose rotation is to be sensed, of said device, is inserted into and connected with a central bore of said hollow rotor shaft, wherein the improvement resides in that a pair of bearings are provided at both ends of said housing and in that both ends of said hollow rotor shaft are rotatably carried by said bearings.

Preferably, the housing is connected by a housing-connecting spring member to the device, whose rotation is to be sensed, or the hollow rotor shaft is connected by a shaft-connecting spring member to the shaft whose rotation is to be sensed.

In the hollow shaft type resolver of the present invention, the hollow shaft is rotatably supported by a pair of bearings provided at both ends of the housing, so that a constant gap is perpetually maintained between the outer periphery of the rotation-sensing rotor and the inner periphery of the rotation-sensing stator in the rotation sensor despite incidental offset or deviation in the shaft mounting position and hence rotation detection signals of a high degree of precision free from the aforementioned offset or deviation may be produced.

Also the housing-connecting spring member is provided between the housing and the device whose rotation is to be sensed, or the shaft-connecting spring member is provided between the hollow rotor shaft and the shaft whose rotation is to be sensed, so that, even with the aforementioned offset or deviation, is becomes possible to not only prevent excess load from being applied to the bearings, but also to prevent the bearings from being injured or fractured.

BRIEF DESCRIPTION OF THE DRAWINGS

Fig. 1 is a cross-sectional view showing a conventional resolver.

Figs. 2 to 10 show a hollow shaft type resolver according to the present invention, wherein Fig. 2 is a cross-sectional view of the resolver.

Fig. 3 is a plan view of Fig. 2.

Fig. 4 is a wiring diagram for a coil.

Fig. 5 is a cross-sectional view showing a modification of the resolver shown in Fig. 2.

Fig. 6 is a cross-sectional view showing a modification of a spring member shown in Fig. 5.

Fig. 7 is a cross-sectional view showing another modification of a spring member shown in Fig. 5.

Fig. 8 is a cross-sectional view of another modification of the resolver shown in Fig. 2.

Fig. 9 is a plan view showing a modification of the spring member shown in Fig. 8.

Fig. 10 is a plan view showing another modification of the spring member shown in Fig. 8.

DESCRIPTION OF PREFERRED EMBODIMENTS

Referring to the drawings, preferred illustrative embodiments of the present invention will be explained in detail. It will be noted that the same numerals are used to depict parts or components that are the same as or equivalent to those of the prior-art device.

Referring to Fig. 2 the numeral 1 denotes a generally cylindrical rotary device, the rotation of which is to be sensed, such as an electrical motor. The device 1 has bearings, not shown, at either ends thereof, whereby a rotor shaft 5, the rotation of which is to be sensed and which integrally carries a rotor of the electric motor, not shown, is mounted for rotation about its own axis by an arrangement similar to that of the prior-art device shown in Fig. 1.

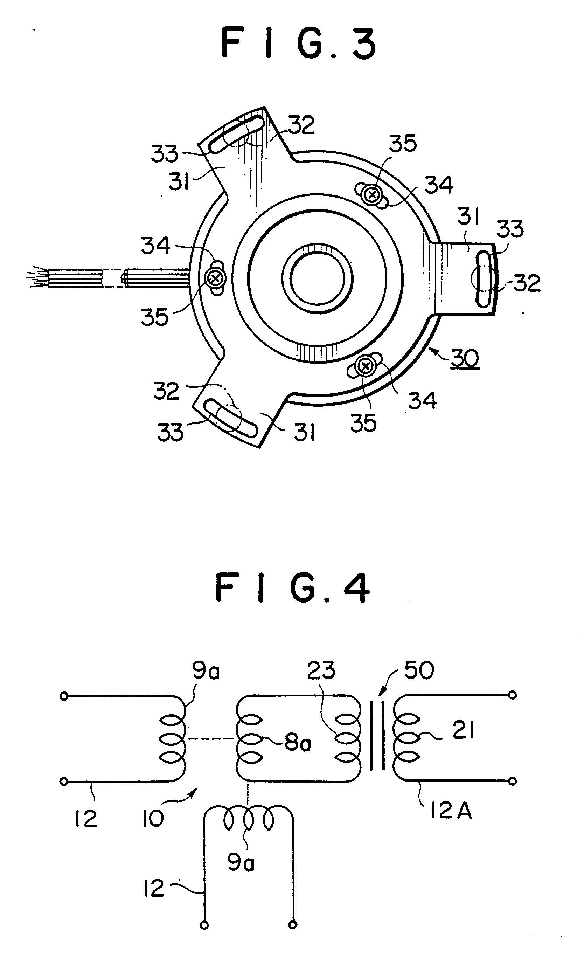

An one end 1A of the device 1, three lugs 31 formed with a plate-like housing-connecting spring member 30, contoured as shown in Fig. 3, are mounted by mounting bolts 32 provided in oblong holes 33 formed in the lugs 31.

The numeral 20 denotes a generally tubular housing of a rotation sensor 10. The housing 20 is provided at either end thereof with a pair of bearings 42, 43 whereby a hollow rotor shaft 22 having a bore 22a is carried for rotation about its own axis.

Three connecting bolts 35 inserted into three connecting oblong holes 34 formed at the perimeter of the housing-connecting spring member 30 are threadedly engaged in three connection screw holes 20B, formed in one end 20A of the housing 20. Only one of the screw holes 20B is shown in Fig. 2. Thus the device 1 and the housing 20 are interconnected resiliently to each other through the housing-connecting spring member 30.

The rotor shaft 5 is inserted and fitted in the bore 22a of the hollow rotor shaft 22 so that the shaft 5 is integrally connected with the hollow rotor shaft 22.

On an inner wall 20a of the housing and toward a bearing 42, there is provided a ring-like rotation-sensing stator 9 comprised of a rotation-sensing stationary winding 9a and a core 9b. On the hollow rotor shaft 22 and in register with the rotation-sensing stator 9, there is provided a ring-shaped rotation-sensing rotor 8 comprised of a rotation-sensing rotary winding 8a and a core 8b.

On the inner wall 20a of the housing 20 and towards a bearing 43, there is provided a rotary transformer ring-shaped stator 21. On the hollow rotor shaft 22 and in register with the rotary transformer stator 21, a rotary transformer ring-shaped rotor 23 is connected to the rotation-sensing rotary winding 8a via connection wiring, not shown. The rotation-sensing rotor 8, the rotation-sensing stator 9, the rotary transformer stator 21 and the rotary transformer rotor 23 make up a rotation sensor 10.

The rotary transformer stator 21 and rotor 23 make up the rotational or signal transmitting device 50 for outputting rotation sensing signals from the rotation-sensing rotor 8 to the outside or supplying electrical power from an electrical source to the rotation-sensing rotor 8. The rotation sensing signals can be taken out at the rotary transformer stator 21 due to the connection by mutual induction between the stator 23 and the rotor 21.

The rotation-sensing stationary winding 9a is fed with AC input exciting signals from outside via signal input line 12. A signal input 12A on which to take out the rotation-sensing signal is connected to the stator 21. This signal output line 12A can also be need for supplying electrical power via this signal output line 12A.

Fig. 4 shows the wiring connection for the rotation sensor 10 and the signal transmitting device 50. It will be noted that signal excitation may be made through the signal input line 12 or through the signal output line 12A.

Meanwhile, the signal transmitting device 50 may be in the form of a well-known slip ring, instead of the rotary transformer.

In the above construction of the hollow shaft type resolver according to the present invention, the device 1 and the housing 20 are interconnected with the aid of the housing-connecting spring member 30 and oblong holes 33, 34, so that, even if the housing 20 is mounted with a small degree of positional deviation or if the shaft 5 is mounted with an offset relative to the hollow rotor shaft 22, any excess loads to the bearings 42, 43 may be absorbed under the resiliency of the spring member 30 to prevent possible injuries to the bearings 42, 43.

Thus a gap D between the outer periphery of the rotation-sensing stator 8 and the inner periphery of the rotation-sensing stator 9 in the rotation sensor 10 may be maintained at all times at a constant value by the bearings 42, 43 to provide for rotation detection with a high degree of precision.

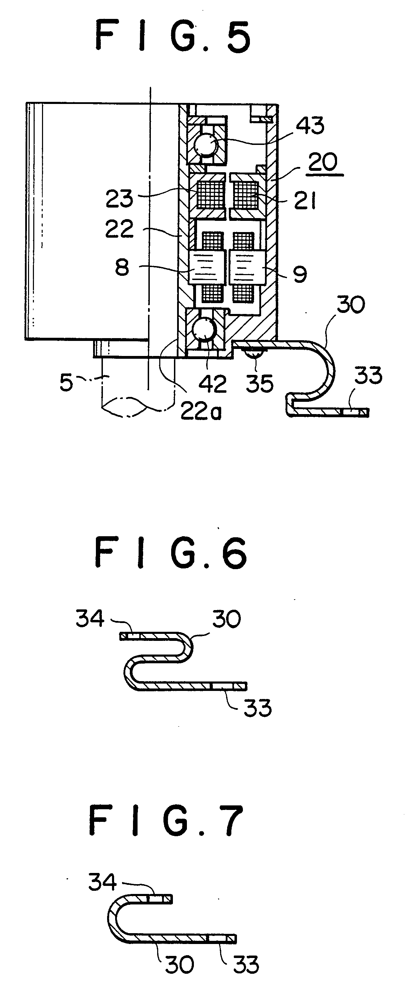

Figs. 5 to 7 illustrate different modifications of the housing-connecting spring member 30. Thus the spring member 30 is S-shaped in Figs. 5 and 6 and the spring member 30 is C-shaped in Fig. 7.

Since the arrangement shown in Figs. 5 to 7 is otherwise the same as that shown in Fig. 2, the same numerals are used for the common parts and ccmponents and the description therefor is omitted for simplicity.

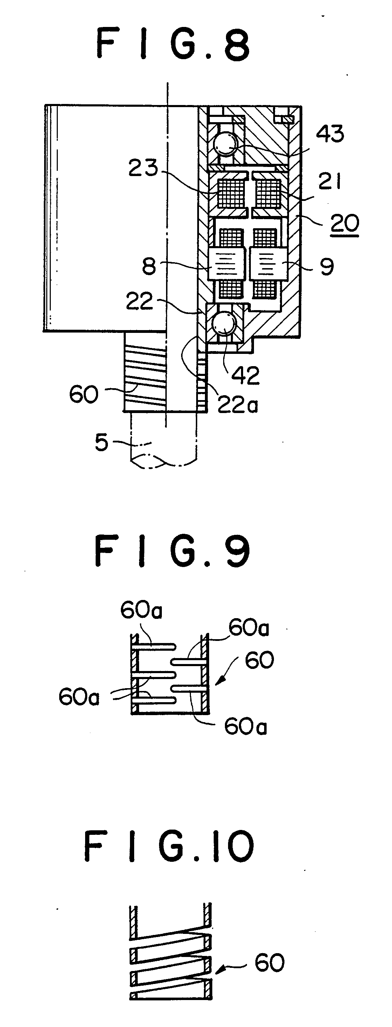

In the arrangement shown in Figs. 8 to 10, a spirally extending shaft-connecting spring member 60 is mounted at the end of the hollow rotor shaft 22 and is connected to the rotor shaft 5 the rotation of which is to be sensed. It will be apparent that any offset or deviation of the rotor shaft 5 may be absorbed in the entirety by the spring member 60 to prevent possible overloading to the bearings 42, 43.

In the embodiment shown in Fig. 9, recesses 60a are alternately formed, whereas, in the embodiment shown in Fig. 10, the spiral spring member is extended in the direction opposite to that shown in Fig. 8.

In the above described hollow shaft type resolver of the present invention, the following effects are derived.

Since the rotation-sensing rotor is provided at the hollow rotor shaft mounted rotatably by a pair of bearings provided at the housing, a constant gap may always be maintained between the rotation-sensing stator and rotor despite incidental offset or deviation in shaft mounting so as to assure stable sensing characteristics.

Also, in case of an excess offset or deviation in the shaft mounting, excess load may be applied to the bearings leading to shortened service life. However, since the device whose rotation is to be sensed is resiliently connected to the housing by the medium of the housing-connecting spring member, or the rotor shaft whose rotation is to be sensed is resiliently connected to the hollow rotor shaft by the medium of the shaft-connecting spring member any offset or deviation in the shaft position may be effectively absorbed by these spring members to prevent injuries to the bearings while assuring prolonged service life of these bearings.

## Claims

1. A hollow shaft type resolver comprising:
a rotation-sensing stator provided at a housing;
a hollow rotor shaft mounted for rotation in said housing;
a rotation-sensing rotor provided on said hollow rotor shaft, and
a signal transmitting device for taking out rotation-sensing signals from said rotation-sensing rotor or for supplying electrical power to said rotation-sensing rotor, wherein said housing is connected to a device whose rotation is to be sensed, and wherein a rotor shaft, whose rotation is to be sensed, of said device, is inserted into and connected with a central bore of said hollow rotor shaft, wherein the improvement resides in that a pair of bearings are provided at both ends of said housing and in that both ends of said hollow rotor shaft are rotatably carried by said bearings.

2. The hollow shaft type resolver according to claim 1 further comprising a housing-connecting spring at one end of said housing, wherein the device whose rotation is to be sensed is connected to said housing by said housing-connecting spring member.

3. The hollow shaft type resolver according to claim 1 further comprising a shaft-connecting spring member, said shaft-connecting spring member being provided at one end of said hollow rotor shaft, wherein the rotor shaft whose rotation is to be sensed is connected to said hollow rotor shaft by the medium of said spring member for connecting said rotor shaft.

4. The hollow shaft type resolver according to any one of claims 1 to 3 wherein said signal transmitting device is a rotary transformer.

# F I G. I

## PRIOR ART

# F I G. 2

# F I G. 3

# F I G. 4

# F I G. 5

43
20
21
23
22
8
9
30
33
35
42
5
22a

# F I G. 6

34
30
33

# F I G. 7

34
30
33

# F I G . 8

# F I G . 9

# F I G . 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-1 815 842 (D. NAPIER & SON LTD) * Claim 1; figure * | 1,2 | G 01 P 3/44 |
| Y | EP-A-0 115 538 (FANUC LTD) * Page 4, lines 12-23; claim 1; figure 3 * | 1,2 | |
| A | PATENT ABSTRACTS OF JAPAN, vol. 4, no. 154 (M-038), 28th October 1980; & JP-A-55 106 702 (MITSUBISHI HEAVY IND. LTD) 15-08-1980 * Abstract * | 4 | |
| | | | **TECHNICAL FIELDS SEARCHED (Int. Cl.5)** |
| | | | G 01 P<br>H 02 K |

The present search report has been drawn up for all claims

| Place of search | Date of completion of the search | Examiner |
|---|---|---|
| THE HAGUE | 31-08-1990 | CHAPPLE I.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)